# EUROPÄISCHE PATENTANMELDUNG

(11) **EP 4 775 274 A1**
(43) Veröffentlichungstag der Anmeldung: **15.07.2026**
(21) Anmeldenummer: 26150314.8
(22) Anmeldetag: 06.01.2026
(51) Int. Cl.: A62C 2/12, F16L 5/04

(54) **BRANDSCHUTZKLAPPE**

(30) Priorität: 09.01.2025 DE 202025100080 U
(71) Anmelder: TROX SE, 47506 Neukirchen-Vluyn (DE)
(72) Erfinder: Fels, Martin, 46459 Rees (DE)
(74) Vertreter: Dr. Stark & Partner Patentanwälte mbB

(57) **Zusammenfassung**

Die Erfindung betrifft eine Brandschutzklappe mit einem Gehäuse (1) und mit einem darin, insbesondere mittig auf den Querschnitt des Gehäuses (1) bezogen, zwischen einer Offenstellung und einer Schließstellung um eine Schwenkachse (2) herum verschwenkbar gelagerten Klappenblatt (3), wobei das Gehäuse (1) eine sich bei Wärmeeinwirkung ausdehnende Warmdichtung (4) aufweist, die sich längs des Umfangs des in seiner Schließstellung befindlichen Klappenblattes (3) erstreckt, wobei das Klappenblatt (3) eine Dicke D aufweist und wobei in der Schließstellung des Klappenblattes (3) zwischen dem Außenrand des Klappenblattes (3) einerseits und dem Gehäuse (1) und der Warmdichtung (4), die sich noch nicht durch Wärmeeinwirkung ausgedehnt hat, andererseits jeweils ein umlaufender Bewegungsspalt (5) vorgesehen ist. Um eine Brandschutzklappe anzugeben, dessen Warmdichtung (4) eine längere Expansionsdauer aufweist, soll die Warmdichtung (4) in einer umlaufenden, beidseitig begrenzten, sich nach außen erstreckenden und zum Inneren des Gehäuses (1) hin geöffneten Gehäusenut (6) angeordnet sein, wobei die Warmdichtung (4)
entweder
einen nicht rechteckigen Querschnitt, vorzugsweise einen kreisrunden einen Radius R aufweisenden Querschnitt, aufweist
oder
einen ovalen Querschnitt mit einer Breite B und einer Höhe H aufweist
oder alternativ
einen rechteckigen Querschnitt mit einer Breite B und einer Höhe H aufweist, wobei die Höhe H mindestens 50 % der Breite B entspricht.

## Beschreibung

Die Erfindung betrifft eine Brandschutzklappe mit einem Gehäuse und mit einem darin, insbesondere mittig auf den Querschnitt des Gehäuses bezogen, zwischen einer Offenstellung und einer Schließstellung um eine Schwenkachse herum verschwenkbar gelagerten Klappenblatt, wobei das Gehäuse eine sich bei Wärmeeinwirkung ausdehnende Warmdichtung aufweist, die sich längs des Umfangs des in seiner Schließstellung befindlichen Klappenblattes erstreckt, wobei das Klappenblatt eine Dicke D aufweist und wobei in der Schließstellung des Klappenblattes zwischen dem Außenrand des Klappenblattes einerseits und dem Gehäuse und der Warmdichtung, die sich noch nicht durch Wärmeeinwirkung ausgedehnt hat, andererseits jeweils ein umlaufender Bewegungsspalt vorgesehen ist.

Unter einer Warmdichtung wird eine intumeszierende Dichtung verstanden, die sich durch Wärmeeinwirkung ausdehnt. Im Brandfall dehnt sich das intumeszierende Material der Dichtung aus, so dass der fertigungs- und konstruktionsbedingt vorhandene und umlaufende Bewegungsspalt, der zwischen dem Außenrand des Klappenblattes und dem Gehäuse vorgesehen ist, abgedichtet wird. Hierdurch ist gewährleistet, dass ein eventueller Brand oder auch dabei entstehende Rauchgase nicht in bisher von dem Brandfall noch nicht betroffene Bereiche einer klimatechnischen Anlage strömen kann (können). Das sich durch Wärmeeinwirkung ausdehnende Material kann beispielsweise pulverisiertes Graphit, einen Polymer-Compound und Kunstharz umfassen. Es sind aber auch andere Materialien möglich. Üblicherweise soll ein Ausdehnen bei einer Temperatur von etwa 160 °C erfolgen. Bei bekannten Brandschutzklappen ist die Warmdichtung als dünner Streifen ausgebildet. Die bisher verwendeten Streifen haben in Abhängigkeit der Abmessungen des jeweiligen Klappenblattes eine Höhe H von etwa 1,8 mm bei einer Breite B von 29 mm oder eine Höhe H von etwa 2,5 mm bis 25 mm. Der Streifen wird auf die Innenseite des Gehäuses längs des Umfangs des in seiner Schließstellung befindlichen Klappenblattes aufgeklebt. Die Warmdichtung ist bei Brandschutzklappen, die ein Klappenblatt mit kleinen Abmessungen aufweisen, dabei breiter als die Dicke D des Klappenblattes. Die Expansionsdauer der Warmdichtung einer bekannten Brandschutzklappe ist recht kurz.

Aufgabe der Erfindung ist es, die vorgenannten Nachteile zu vermeiden und eine Brandschutzklappe anzugeben, dessen Warmdichtung eine längere Expansionsdauer aufweist.

Diese Aufgabe wird dadurch gelöst, dass die Warmdichtung in einer umlaufenden, beidseitig begrenzten, sich nach außen erstreckenden und zum Inneren des Gehäuses hin geöffneten Gehäusenut angeordnet ist, wobei die Warmdichtung
- entweder: einen nicht rechteckigen Querschnitt, vorzugsweise einen kreisrunden einen Radius R aufweisenden Querschnitt, aufweist
- oder: einen ovalen Querschnitt mit einer Breite B und einer Höhe H aufweist
- oder alternativ: einen rechteckigen Querschnitt mit einer Breite B und einer Höhe H aufweist, wobei die Höhe H mindestens 50 % der Breite B entspricht.

Aufgrund der Form und/oder des gewählten Verhältnisses der Warmdichtung kommt der Warmdichtung im Brandfall eine längere Aufschäumdauer zu. So setzt das Aufschäumen in den Bereichen der Warmdichtung, die tiefer in der Gehäusenut angeordnet sind, verzögert ein. Infolgedessen gelangt in einem Brandfall die Wärme mit zunehmender Tiefe verzögerter zu der Warmdichtung, so dass sich infolgedessen auch die Warmdichtung verzögert ausdehnt. Die Expansionsdauer ist damit länger. Damit steht dem Klappenblatt wiederum ein längerer Zeitraum zur Verfügung, sich in seine Schließstellung zu verlagern. Zum anderen ist aufgrund der Form und/oder des gewählten Verhältnisses der Warmdichtung die Menge an erforderlichem Aufschäummaterial im Vergleich zu den im Stand der Technik bekannten Streifen geringer. Sofern die Brandschutzklappe mit Mörtel in eine Ausnehmung, beispielsweise einer Wand, eingebaut ist, befindet sich der Teilbereich des Gehäuses mit der Gehäusenut in dem Mörtelbett. Durch den Mörtel wird die Gehäusenut und damit auch die darin befindliche Warmdichtung vor Wärme in einem Brandfall geschützt.

Vorzugsweise kann bei der einen rechteckigen Querschnitt aufweisenden Warmdichtung die Höhe H mindestens 70 % der Breite B entsprechen.

Vorzugsweise kann bei der einen kreisrunden Querschnitt aufweisenden Warmdichtung der Radius R gleich 2,5 mm oder größer als 2,5 mm sein.

Bei der einen ovalen Querschnitt aufweisenden Warmdichtung kann die Höhe H mindestens 50 % der Breite B, vorzugsweise mindestens 70 % der Breite B, entsprechen.

Die Breite B der einen rechteckigen oder ovalen Querschnitt aufweisenden Warmdichtung oder der Radius R der einen kreisrunden Querschnitt aufweisenden Warmdichtung kann vorzugsweise kleiner als die Dicke des Klappenblattes sein und vorzugsweise mindestens ein Viertel der Dicke D des Klappenblattes betragen. Dadurch steht das Klappenblatt in axialer Richtung des Gehäuses gesehen gegenüber der Warmdichtung auf beiden Seiten über. Infolgedessen gelangt in einem Brandfall die Wärme noch verzögerter zu der Warmdichtung, so dass sich infolgedessen auch die Warmdichtung noch verzögerter ausdehnt. Da die Breite B der Warmdichtung oder der Radius R der einen kreisrunden Querschnitt aufweisenden Warmdichtung kleiner als die Dicke D des Klappenblattes ist, steht somit die Warmdichtung vollständig beim Aufschäumen zum Abdichten des Bewegungsspaltes zur Verfügung. Damit kann die Menge an aufschäumendem Material noch weiter reduziert werden.

Die Warmdichtung kann im noch nicht durch Wärmeeinwirkung ausgedehnten Zustand die Gehäusenut zumindest nahezu vollständig, vorzugsweise vollständig, ausfüllen.

Die Warmdichtung kann durch Klemmung in der Gehäusenut fixiert sein. Durch die Klemmung bedarf es keiner weiteren Befestigung, beispielsweise durch Verkleben, mehr.

Die Kontur der Warmdichtung im noch nicht durch Wärmeeinwirkung ausgedehnten Zustand kann der Kontur der Gehäusenut angepasst sein.

Die Gehäusenut kann zwei, vorzugsweise parallel ausgerichtete, Nutflanken aufweisen, die in einen abgerundeten Nutgrund übergehen.

Alternativ kann die Gehäusenut einen eckigen, vorzugsweise viereckigen, Querschnitt aufweisen. Bei einer viereckigen Ausgestaltung kann die Gehäusenut beispielsweise zwei parallel ausgerichtete Nutflanken und einen hierzu rechtwinklig ausgerichteten Nutgrund aufweisen.

Dabei können die Ecken der Gehäusenut abgerundet sein.

Die Gehäusenut kann in Bezug auf die Dicke D des Klappenblattes, wenn sich das Klappenblatt in seiner Schließstellung befindet, zumindest etwa mittig, vorzugsweise mittig, angeordnet sein.

Zur Kaltabdichtung kann das Klappenblatt eine umlaufende, gegenüber dem Klappenblattrand vorstehende, Lippendichtung aufweisen. Die Lippendichtung dichtet den umlaufenden Bewegungsspalt zwischen dem sich in seiner Schließstellung befindlichen Klappenblatt und der Warmdichtung ab, wenn sich die Warmdichtung noch nicht durch Wärmeeinwirkung ausgedehnt hat.

Das Klappenblatt kann zur Fixierung der Lippendichtung in seinem Klappenblattrand eine umlaufende, vorzugsweise in Bezug auf die Dicke D des Klappenblattes mittig angeordnete, Klappenblattnut zur Aufnahme der Lippendichtung aufweisen, und die Klappenblattnut kann in der Schließstellung des Klappenblattes der Gehäusenut gegenüberliegend angeordnet sein.

Es bietet sich an, wenn in axialer Richtung des Gehäuses gesehen die Schwenkachse des Klappenblattes gegenüber der Gehäusenut versetzt angeordnet ist. Dann wird die Warmdichtung nicht an zwei Stellen durch die Schwenkachse unterbrochen, sondern zieht sich durchgehend umlaufend um das Klappenblatt.

Auf zumindest einer Seite der Gehäusenut kann in axialer Richtung des Gehäuses gesehen das Gehäuse unter Bildung eines perforierten Gehäusebereichs perforiert ausgebildet sein. Durch den perforierten Bereich wird der Wärmeübergang über das Gehäuse von der einen Seite auf die gegenüberliegende Seite des perforierten Bereichs erschwert, da im Bereich des perforierten Bereichs weniger Material für eine Wärmeübertragung zur Verfügung steht.

Die Brandschutzklappe kann eine Auslöseeinrichtung aufweisen, die in eine Fixierposition bringbar und durch Hitze oder dergleichen auslösbar und damit automatisch in eine Freigabeposition verlagerbar ist.

Im Folgenden werden in den Zeichnungen dargestellte Ausführungsbeispiele der Erfindung erläutert. Es zeigen:
- Fig. 1: eine Seitenansicht auf ein erstes Ausführungsbeispiel einer erfindungsgemäßen Brandschutzklappe,
- Fig. 2: einen Schnitt durch den Gegenstand nach Fig. 1,
- Fig. 3: das Detail "A" aus Fig. 2,
- Fig. 4: eine Seitenansicht auf ein zweites Ausführungsbeispiel einer erfindungsgemäßen Brandschutzklappe,
- Fig. 5: einen Schnitt durch den Gegenstand nach Fig. 4,
- Fig. 6: das Detail "B" aus Fig. 5 und

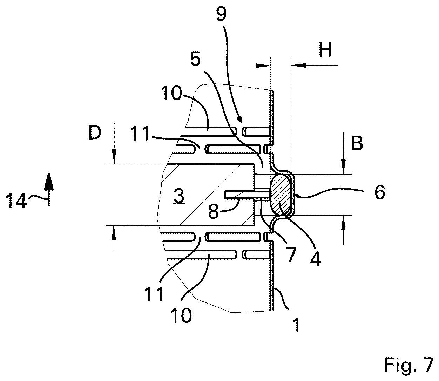

- Fig. 7: einen Schnitt durch einen Teilbereich eines dritten Ausführungsbeispiels einer erfindungsgemäßen Brandschutzklappe.

In allen Figuren werden für gleiche bzw. gleichartige Bauteile übereinstimmende Bezugszeichen verwendet.

Die Figuren zeigen eine Brandschutzklappe mit einem Gehäuse 1 und mit einem darin, mittig auf den Querschnitt des Gehäuses 1 bezogen, zwischen einer Offenstellung und einer Schließstellung um eine Schwenkachse 2 herum verschwenkbar gelagerten Klappenblatt 3.

Das Gehäuse 1 weist eine Gehäusenut 6 auf, in der eine sich bei Wärmeeinwirkung ausdehnende Warmdichtung 4 klemmend fixiert ist. Die Gehäusenut 6 erstreckt sich längs des Umfangs des in seiner Schließstellung befindlichen Klappenblattes 3, das eine Dicke D aufweist. In der Schließstellung des Klappenblattes 3 ist zwischen dem Außenrand des Klappenblattes 3 und der Warmdichtung 4, die sich noch nicht durch Wärmeeinwirkung ausgedehnt hat, ein umlaufender Bewegungsspalt 5 vorgesehen.

Die Gehäusenut 6 ist umlaufend ausgebildet, beidseitig begrenzt und erstreckt sich nach außen. Insoweit verengt die Gehäusenut 6 den Strömungsquerschnitt des Gehäuses 1 nicht. Die Gehäusenut 6 ist zum Inneren des Gehäuses 1 hin geöffnet.

Die Gehäusenut 6 ist in den drei dargestellten Ausführungsbeispielen in Bezug auf die Dicke D des Klappenblattes 3, wenn sich das Klappenblatt 3 in seiner Schließstellung befindet, mittig angeordnet. Damit steht das Klappenblatt 3 in axialer Richtung des Gehäuses 1 gesehen auf beiden Seiten in einem gleichen Maß gegenüber der Warmdichtung 4 vor.

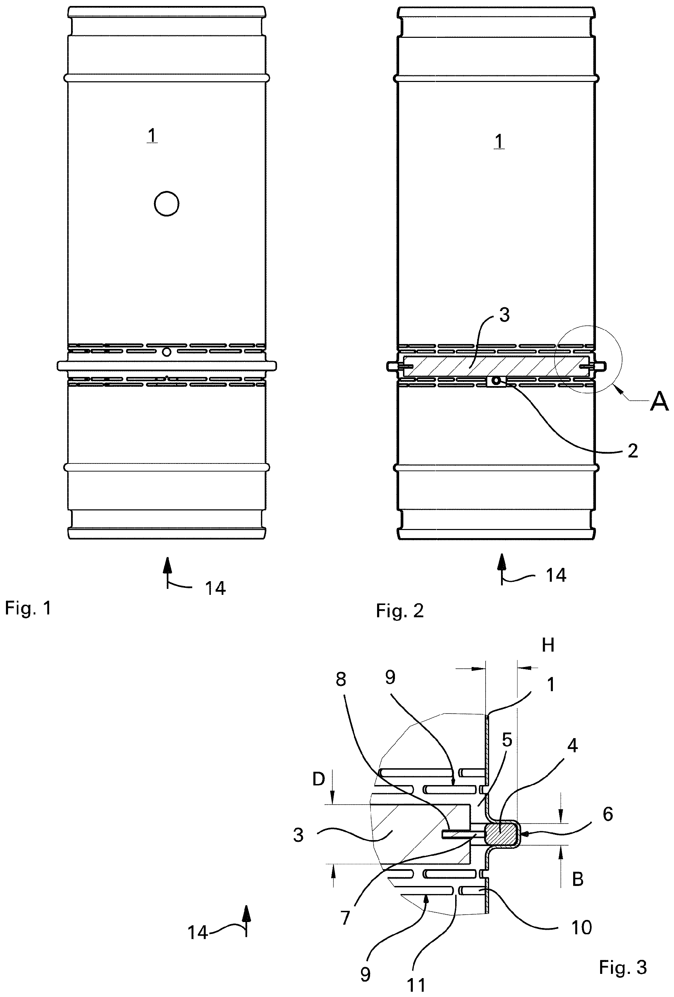

Bei dem Ausführungsbeispiel nach Fig. 1 weist die Gehäusenut 6 einen viereckigen Querschnitt auf, wobei die Ecken der Gehäusenut 6 abgerundet sind. Auch die Warmdichtung 4 weist einen entsprechenden viereckigen Querschnitt auf, wobei die Ecken abgerundet sind. Die Warmdichtung 4 hat eine Breite B und eine Höhe H. Die Breite B erstreckt sich insoweit parallel zur Strömungsrichtung 14 des in dem Gehäuse 1 strömenden gasförmigen Mediums. Die Kontur der Warmdichtung 4 im noch nicht durch Wärmeeinwirkung ausgedehnten Zustand ist der Kontur der Gehäusenut 6 angepasst, so dass die Warmdichtung 4 im noch nicht durch Wärmeeinwirkung ausgedehnten Zustand die Gehäusenut 6 ausfüllt. Die Warmdichtung 4 ist durch Klemmung in der Gehäusenut 6 fixiert.

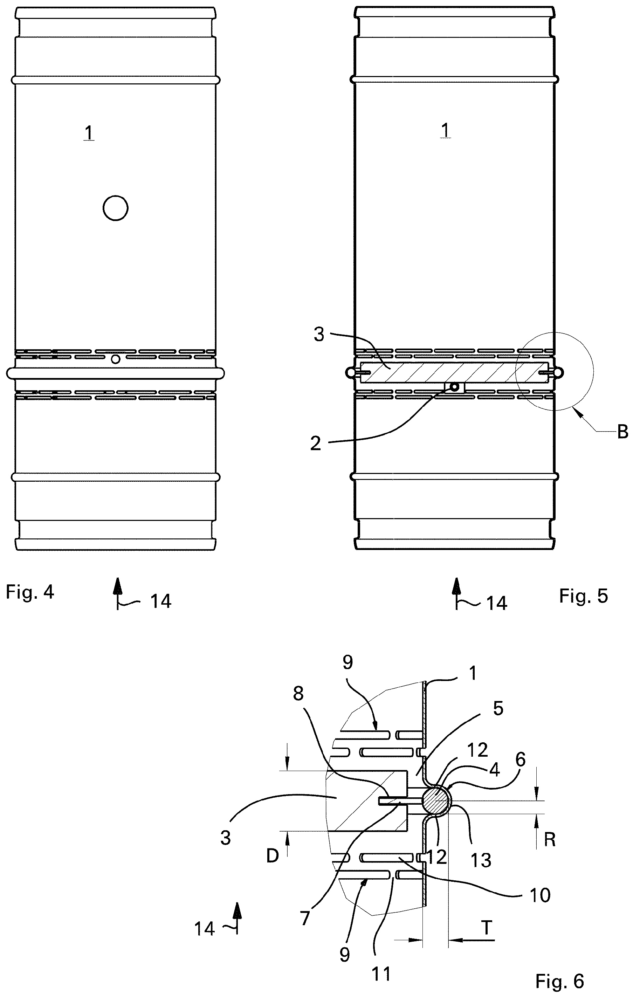

Bei dem Ausführungsbeispiel nach Fig. 4 weist die Gehäusenut 6 zwei parallele Nutflanken 12 auf, die in einen abgerundeten Nutgrund 13 übergehen. Die Warmdichtung 4 weist einen runden Querschnitt mit dem Radius R auf und ist durch Klemmung in der Gehäusenut 6 fixiert. Die Kontur der Warmdichtung 4 ist dabei in dem dem Nutgrund 13 zugewandten Bereich der Kontur der Gehäusenut 6 angepasst. Die Tiefe T der Gehäusenut 6 entspricht dem doppelten Radius R der Warmdichtung 4, so dass in diesem Ausführungsbeispiel die Warmdichtung 4 den Strömungsquerschnitt des Gehäuses 1 nicht reduziert.

Wie insbesondere den Fig. 3, 6 und auch 7 zu entnehmen ist, weist das Klappenblatt 3 eine umlaufende, gegenüber dem Klappenblattrand vorstehende, Lippendichtung 7 auf. Zur Befestigung weist das Klappenblatt 3 in seinem Klappenblattrand eine umlaufende, in Bezug auf die Dicke D des Klappenblattes 3 mittig angeordnete Klappenblattnut 8 zur Aufnahme der Lippendichtung 7 auf. Die Klappenblattnut 8 ist in der Schließstellung des Klappenblattes 3 der Gehäusenut 6 gegenüberliegend angeordnet.

Wie den Fig. 2 und 4 zu entnehmen ist, ist in axialer Richtung des Gehäuses 1 gesehen, d. h. in Strömungsrichtung 14 gesehen, die Schwenkachse 2 des Klappenblattes 3 gegenüber der Gehäusenut 6 versetzt angeordnet.

Wie die Figuren weiterhin zeigen, ist auf beiden Seiten der Gehäusenut 6 in axialer Richtung des Gehäuses 1 gesehen das Gehäuse 1 jeweils unter Bildung eines perforierten Gehäusebereichs 9 perforiert ausgebildet. In den dargestellten Ausführungsbeispielen besteht jeder perforierte Gehäusebereich 9 aus zwei Reihen an länglichen Schlitzen 10 mit dazwischen befindlichen Stegen 11. Die beiden Reihen an Schlitzen 10 eines perforierten Gehäusebereichs 9 sind um die halbe Länge eines länglichen Schlitzes 10 versetzt zueinander angeordnet. Jeder perforierte Gehäusebereich 9 ist umlaufend ausgebildet.

## Patentansprüche

1. Brandschutzklappe mit einem Gehäuse (1) und mit einem darin, insbesondere mittig auf den Querschnitt des Gehäuses (1) bezogen, zwischen einer Offenstellung und einer Schließstellung um eine Schwenkachse (2) herum verschwenkbar gelagerten Klappenblatt (3), wobei das Gehäuse (1) eine sich bei Wärmeeinwirkung ausdehnende Warmdichtung (4) aufweist, die sich längs des Umfangs des in seiner Schließstellung befindlichen Klappenblattes (3) erstreckt, wobei das Klappenblatt (3) eine Dicke D aufweist und wobei in der Schließstellung des Klappenblattes (3) zwischen dem Außenrand des Klappenblattes (3) einerseits und dem Gehäuse (1) und der Warmdichtung (4), die sich noch nicht durch Wärmeeinwirkung ausgedehnt hat, andererseits jeweils ein umlaufender Bewegungsspalt (5) vorgesehen ist, **dadurch gekennzeichnet, dass** die Warmdichtung (4) in einer umlaufenden, beidseitig begrenzten, sich nach außen erstreckenden und zum Inneren des Gehäuses (1) hin geöffneten Gehäusenut (6) angeordnet ist, wobei die Warmdichtung (4)
entweder einen nicht rechteckigen Querschnitt, vorzugsweise einen kreisrunden einen Radius R aufweisenden Querschnitt, aufweist
oder einen ovalen Querschnitt mit einer Breite B und einer Höhe H aufweist
oder alternativ einen rechteckigen Querschnitt mit einer Breite B und einer Höhe H aufweist, wobei die Höhe H mindestens 50 % der Breite B entspricht.

2. Brandschutzklappe nach dem vorhergehenden Anspruch, **dadurch gekennzeichnet, dass** bei der einen rechteckigen Querschnitt aufweisenden Warmdichtung (4) die Höhe H mindestens 70 % der Breite B entspricht.

3. Brandschutzklappe nach Anspruch 1, **dadurch gekennzeichnet, dass** bei der einen kreisrunden Querschnitt aufweisenden Warmdichtung (4) der Radius R gleich 2,5 mm oder größer als 2,5 mm ist.

4. Brandschutzklappe nach Anspruch 1, **dadurch gekennzeichnet, dass** bei der einen ovalen Querschnitt aufweisenden Warmdichtung (4) die Höhe H mindestens 50 % der Breite B, vorzugsweise mindestens 70 % der Breite B, entspricht.

5. Brandschutzklappe nach einem der vorhergehenden Ansprüche, **dadurch gekennzeichnet, dass** die Breite B der einen rechteckigen oder ovalen Querschnitt aufweisenden Warmdichtung (4) oder der Radius R der einen kreisrunden Querschnitt aufweisenden Warmdichtung (4) kleiner als die Dicke des Klappenblattes (3) ist und vorzugsweise mindestens ein Viertel der Dicke D des Klappenblattes (3) beträgt.

6. Brandschutzklappe nach einem der vorhergehenden Ansprüche, **dadurch gekennzeichnet, dass** die Warmdichtung (4) im noch nicht durch Wärmeeinwirkung ausgedehnten Zustand die Gehäusenut (6) zumindest nahezu vollständig, vorzugsweise vollständig, ausfüllt.

7. Brandschutzklappe nach einem der vorhergehenden Ansprüche, **dadurch gekennzeichnet, dass** die Warmdichtung (4) durch Klemmung in der Gehäusenut (6) fixiert ist.

8. Brandschutzklappe nach einem der vorhergehenden Ansprüche, **dadurch gekennzeichnet, dass** die Kontur der Warmdichtung (4) im noch nicht durch Wärmeeinwirkung ausgedehnten Zustand der Kontur der Gehäusenut (6) angepasst ist.

9. Brandschutzklappe nach einem der vorhergehenden Ansprüche, **dadurch gekennzeichnet, dass** die Gehäusenut (6) zwei, vorzugsweise parallel ausgerichtete, Nutflanken (12) aufweist, die in einen abgerundeten Nutgrund (13) übergehen.

10. Brandschutzklappe nach einem der Ansprüche 1 bis 8, **dadurch gekennzeichnet, dass** die Gehäusenut (6) einen eckigen, vorzugsweise viereckigen, Querschnitt aufweist.

11. Brandschutzklappe nach dem vorhergehenden Anspruch, **dadurch gekennzeichnet, dass** die Ecken der Gehäusenut (6) abgerundet sind.

12. Brandschutzklappe nach einem der vorhergehenden Ansprüche, **dadurch gekennzeichnet, dass** die Gehäusenut (6) in Bezug auf die Dicke D des Klappenblattes (3), wenn sich das Klappenblatt (3) in seiner Schließstellung befindet, zumindest etwa mittig, vorzugsweise mittig, angeordnet ist.

13. Brandschutzklappe nach einem der vorhergehenden Ansprüche, **dadurch gekennzeichnet, dass** das Klappenblatt (3) eine umlaufende, gegenüber dem Klappenblattrand vorstehende, Lippendichtung (7) aufweist.

14. Brandschutzklappe nach dem vorhergehenden Anspruch, **dadurch gekennzeichnet, dass** das Klappenblatt (3) in seinem Klappenblattrand eine umlaufende, vorzugsweise in Bezug auf die Dicke D des Klappenblattes (3) mittig angeordnete, Klappenblattnut (8) zur Aufnahme der Lippendichtung (7) aufweist und dass die Klappenblattnut (8) in der Schließstellung des Klappenblattes (3) der Gehäusenut (6) gegenüberliegend angeordnet ist.

15. Brandschutzklappe nach einem der vorhergehenden Ansprüche, **dadurch gekennzeichnet, dass** in axialer Richtung des Gehäuses (1) gesehen die Schwenkachse (2) des Klappenblattes (3) gegenüber der Gehäusenut (6) versetzt angeordnet ist.

16. Brandschutzklappe nach einem der vorhergehenden Ansprüche, **dadurch gekennzeichnet, dass** auf zumindest einer Seite der Gehäusenut (6) in axialer Richtung des Gehäuses (1) gesehen das Gehäuse (1) unter Bildung eines perforierten Gehäusebereichs (9) perforiert ausgebildet ist.

17. Brandschutzklappe nach einem der vorhergehenden Ansprüche, **dadurch gekennzeichnet, dass** die Brandschutzklappe eine Auslöseeinrichtung aufweist, die in eine Fixierposition bringbar und durch Hitze oder dergleichen auslösbar und damit automatisch in eine Freigabeposition verlagerbar ist.
